# EUROPEAN PATENT SPECIFICATION

(11) **EP 1 145 937 B1**
(45) Date of publication and mention of the grant of the patent: **29.06.2005**
(21) Application number: 01109031.3
(22) Date of filing: 11.04.2001
(51) Int. Cl.: B62D 25/04

(54) **Vehicle window member support structure**
Tragstruktur eines Fahrzeugfensterteiles
Structure de support d'un élément de fenêtre d'un véhicule

(30) Priority: 12.04.2000 JP 2000111260
(43) Date of publication of application: 17.10.2001
(73) Proprietor: Toyota Jidosha Kabushiki Kaisha, Toyota-shi, Aichi-ken 471-8571 (JP)
(72) Inventor: Hamada, Makoto, Toyota-shi, Aichi-ken, 471-8571 (JP); Hosoya, Toshiaki, Toyota-shi, Aichi-ken, 471-8571 (JP)
(74) Representative: Leson, Thomas Johannes Alois, Dipl.-Ing.

(56) References cited:
- EP-A- 0 896 908
- WO-A-99/62755
- DE-A- 19 921 871
- GB-A- 2 308 340
- US-A- 4 679 845
- US-A- 5 056 850
- US-A- 5 791 716

## Description

### BACKGROUND OF THE INVENTION

### 1. Field of the Invention

The invention relates to a vehicle window member support structure, according to the preamble of claim 1 and more particularly to a vehicle window member support structure for supporting a windshield glass of an automobile.

### 2.Description of Related Art

An example of a vehicle window member support structure for supporting a windshield glass of a vehicle is disclosed in Japanese Patent Laid-Open Publication No. HEI 11-342863.

In this patent publication, a vehicle window member support structure as shown in Fig. 12 is disclosed. In this structure, a windshield glass 110 is a window member supported by a front pillar 100. An inner frame 102 provides a framework for the front pillar 100. A weak portion 106 is formed at a portion to the inside in a vehicle cabin 104 of the inner frame 102. The weak portion 106 also functions to induce deformation of the front pillar 100. A protection member 108 is disposed on a portion to the outside in the vehicle cabin of the inner frame 102.

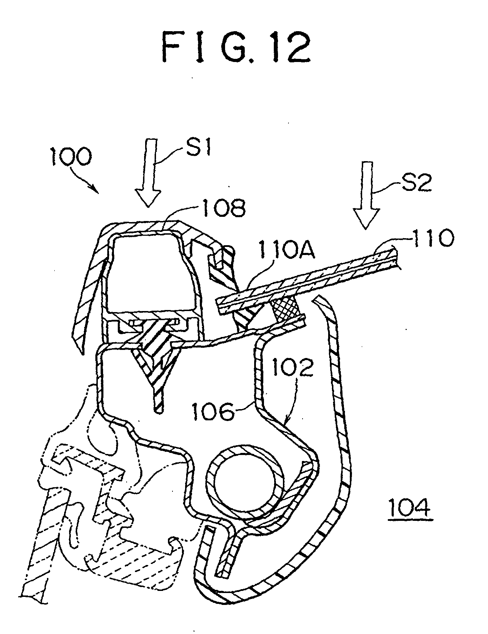

Accordingly, when a colliding body collides against the front pillar 100, as shown by an arrow S1 in Fig. 12, the protection member 108 is crushed as well as the weak portion 106 of the inner frame 102. As a result, the impact energy is absorbed by the protection member 108 and the weak portion 106, thereby lessening the impact against the colliding body.

Further, when a colliding body collides against the windshield glass 110, as shown by an arrow S2 in Fig. 12, load is input to the inner frame 102 from an edge 110A of the windshield glass 110. As a result, the weak portion 106 of the inner frame 102 crushes and the impact energy is absorbed.

Therefore, to further improve the impact absorbing capability against a colliding body, the rigidity of the weak portion 106 must further be reduced. In this case, if the rigidity of the weak portion 106 is made too low, it may become difficult to obtain a desired rigidity as a frame member at a pillar portion.

On the other hand, the rigidity of the weak portion 106 must be increased in order to obtain rigidity as a frame member in the pillar structure. In this case, if the rigidity of the weak portion 106 is made too high, the impact absorbing performance against a colliding body may be impaired.

Furthermore, a vehicle window support structure according to the state of the art is disclosed in reference EP 0 896 908 A. According to this state of the art, the vehicle window member support structure includes a pillar framework member constituting a framework of a pillar and a window member. This structure further comprises a pillar portion window member installation means having an overlapped portion overlapping with the pillar framework member and an extended portion extending from the overlapped portion toward a window side, which supports the window member at the extended portion. This state of the art discloses a portion for supporting a window member of a pillar portion window member installation means which is fixed to framework members however with no space there between.

### SUMMARY OF THE INVENTION

It is an object of the invention to provide a vehicle window member support structure that improves the impact absorbing performance against an object colliding against the window member while maintaining the rigidity of the pillar framework member. The object is solved by a vehicle window member support structure having the combination of the features of claim 1. Further developments are set forth in the dependent claims.

The vehicle window member support structure of the invention is provided with a pillar framework member and pillar portion window member installation means. This pillar portion window member installation means has an overlapped portion overlapping the pillar framework member, and an extended portion extending from the overlapped portion toward the window side, which supports the window member at the extended portion.

Consequently, the window member is separated from the pillar framework member that bears the strength and rigidity of the pillar by the pillar portion window member installation means. Accordingly, if a colliding body collides against the window member, the extended portion of the pillar portion window member installation means deforms first. Even in a state where the extended portion is deformed, the pillar framework still maintains its rigidity. Through this deformation, the impact absorbing performance against an object colliding against the window member can be improved.

Also, in the vehicle window member support structure mentioned above, an impact absorbing auxiliary member may be provided between the pillar framework member and the pillar portion window member installation means.

In this case, the impact absorbing auxiliary member provided between the pillar framework member and the pillar portion window member installation means allows effective improvement of the impact absorbing performance against a colliding body. Further, the impact absorbing performance can be easily adjusted by selecting various types of impact absorbing auxiliary members.

Also, the pillar portion window member installation means may be disposed adjacent to a fender.

In this case, the chances of the adjoining portion of the fender and the lower portion of the front pillar, where the frequency of collisions from a colliding body is generally high, becoming rigid in some areas can be reduced, which increases the deformation stroke and improves the impact absorbing performance against a colliding body.

Moreover, the vehicle window member support structure above may further be provided with cowl portion window member installation means having an overlapped portion overlapping with a cowl framework member and an extended portion extending from the overlapped portion toward the window side, which supports the window member at the extended portion. The pillar portion window member installation means and the cowl portion window member installation means may be integrated at the cowl end in the vehicle width direction thereof and the pillar lower end.

In such case, since the pillar portion window member installation means and the cowl portion window member installation means are prevented to overlap each other at the lower side corner portion of the window member, a joint of the pillar and cowl that is located outside the corner of the window is prevented from becoming rigid such that an impact absorbing effect is obtained.

Further, in the window member support structure described above wherein the pillar portion window member installation means and the cowl portion window member installation means are integrated, both left and right members of the cowl portion at the ends thereof in the vehicle width direction may be made from one member.

By adopting such a structure, the number of parts used can be reduced.

Also, in the above-mentioned window member support structure wherein the pillar portion window member installation means and the cowl portion window member installation means are integrated, the member in which the pillar portion window member installation means and the cowl portion window member installation means are integrated may be disposed adjacent to a fender.

In this case, the chances of the adjoining portion of the fender and the cowl (that is, the lower portion of the front pillar), where the frequency of collisions from a colliding body is generally high, becoming rigid in some areas can be reduced, which increases deformation stroke and improves the impact absorbing performance against a colliding body.

Further, in the vehicle window member support structure above, at least one of the extended portion of the pillar portion window member installation means and the extended portion of the cowl portion window member installation means may also serve as an outer panel design surface.

By adopting such a structure, since the extended portion of the pillar portion window member installation means and the extended portion of the cowl portion window member installation means also serve as the outer panel design surface, no separate member for trim will be needed.

Also, the vehicle window member support structure may be provided with a framework member that makes up the framework of the vehicle and a window member, and further provided with an extended portion interposed between the framework member and the window member such that the extended portion deforms without the window member and the framework member interfering with each other.

By adopting this type of structure, interference between the window member and the framework member at the time of deformation of the extended portion can be prevented.

### BRIEF DESCRIPTION OF THE DRAWINGS

Fig. 1 is a sectional view of a vehicle window member support structure according to a first embodiment of the invention taken along line 1-1 in Fig. 3;
Fig. 2 is a sectional view illustrating a deformed state of the window member support structure according to the first embodiment of the invention corresponding to Fig. 1;
Fig. 3 is a perspective view of a front portion of a vehicle to which the vehicle window member support structure according to the first embodiment of the invention has been applied;
Fig. 4 is a sectional view showing a vehicle window member support structure according to a second embodiment of the invention corresponding to Fig. 1;
Fig. 5 is a sectional view showing a vehicle window member support structure according to a third embodiment of the invention corresponding to Fig. 1;
Fig. 6 is a sectional view of the vehicle window member support structure according to a modified example of the third embodiment of the invention corresponding to Fig. 1;
Fig. 7 is a sectional view of a vehicle window member support structure according to a fourth embodiment of the invention taken along line 7-7 in Fig. 8;
Fig. 8 is a side view showing a front portion of a vehicle to which the vehicle window member support structure according to the fourth embodiment of the invention has been applied;
Fig. 9 is a schematic perspective view showing a front portion of a vehicle to which a vehicle window member support structure according to a fifth embodiment of the invention has been applied;
Fig. 10 is a side view of the front portion of the vehicle to which the vehicle window member support structure according to the fifth embodiment of the invention has been applied;
Fig. 11 is a sectional view taken along line 11-11 in Fig. 9; and
Fig. 12 is a sectional view of the vehicle window member support structure.

### DETAILED DESCRIPTION OF THE PREFERRED EMBODIMENTS

### First embodiment

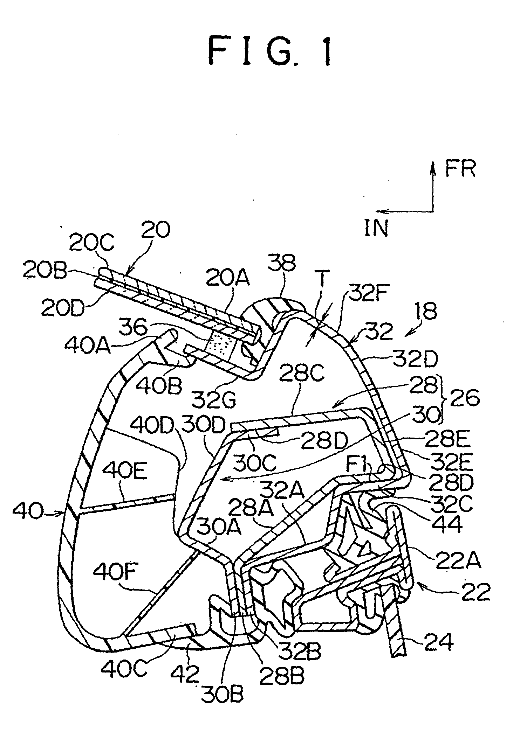

A first embodiment of the vehicle window member support structure of the invention will be described with reference to attached Figs. 1 through 3.

Arrows FR in Figs. 1 through 11 indicate the front direction of the vehicle, arrows UP indicate the upward direction of the vehicle, and arrows IN indicate the inward direction in the vehicle width direction.

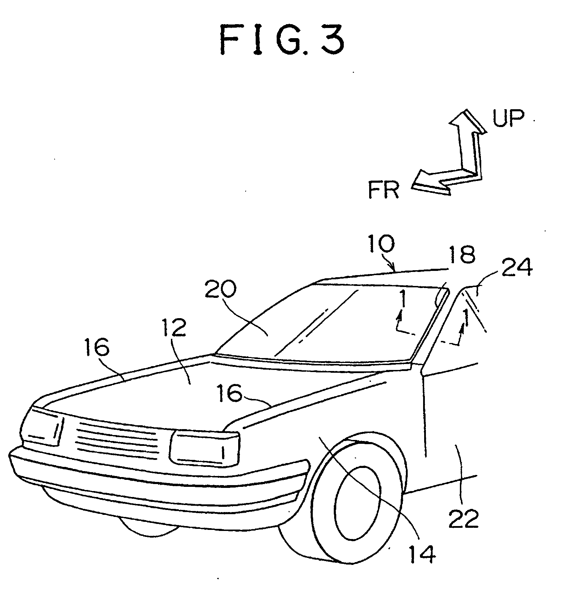

As shown in Fig. 3, in the first embodiment, a border 16 between a hood 12 and a fender 14 of a vehicle body 10 extends in the longitudinal direction of the vehicle. A front pillar is disposed to the rear of this boarder 16. A windshield glass 20 serving as the window member is disposed between left and right front pillars 18. A door glass 24 of a front side door 22 is disposed behind the left and right front pillars 18.

Fig. 1 is a sectional view taken along line 1-1 in Fig. 3.

As shown in Fig. 1, a pillar framework member 26 of the front pillar 18 includes a pillar reinforcement 28 and a pillar inner panel 30. The pillar framework member 26 bears the strength and rigidity of the front pillar 18. The pillar reinforcement 28 is generally U-shaped with an opening thereof generally directed toward the inside in the vehicle width direction. A flange 28B is formed toward the rear at an end to the inside in the vehicle width direction of a rear wall 28A. The pillar inner panel 30 is generally U-shaped with the opening thereof directed generally toward the outside in the vehicle width direction. A flange 30B is formed toward the rear at the end to the outside in the vehicle width direction of a rear wall 30A. The flange 28B of the pillar reinforcement 28 and the flange 30B of the pillar inner panel 30 are bonded and welded to each other.

On the other hand, a front wall 28C of the pillar reinforcement 28 is provided extending generally toward the inside in the vehicle width direction. On a rear side face 28D of the end to the inside in the vehicle width direction of the front wall 28C, a front wall 30C of the pillar inner panel 30 is bonded and welded. This is to prevent the high-strength flange from protruding toward the front of the vehicle, and to enlarge a sectional area of the pillar framework member 26. With this construction, since there is no flange protruding toward the front of the vehicle, even if the sectional area of the pillar framework member 26 is enlarged, a longer distance can be provided between a window member support portion 32G, to be described later, and the pillar framework member 26. Also, by enlarging the sectional area of the pillar framework member 26, the rigidity of the pillar structure can be enhanced.

Further, the pillar framework member 26 is made such that it does not move relative to the vehicle at the time of deformation of the extended portion to be described later.

On the side portion to the outside in the vehicle width direction of the pillar reinforcement 28, a pillar outer panel 32 serving as the pillar portion window installation means is disposed. The pillar outer panel 32 is hat-shaped so that it is open generally toward the inside with respect to the vehicle width direction. A rear wall 32A is formed on the pillar outer panel 32. At the end to the inside in the vehicle width direction of the rear wall 32A, a flange 32B is formed toward the rear. This flange 32B is bonded and welded to the flange 28B of the pillar reinforcement 28. The pillar outer panel 32 has the rear wall 32A and the pillar reinforcement 28 has the rear wall 28A. The pillar outer panel 32 is bonded to the pillar framework member 26 by overlapping and welding an end 32C to the outside in the vehicle width direction of the rear wall 32A and an end 28D to the outside in the vehicle width direction of the rear wall 28A. This bonded portion will be referred to as the fixed portion F1.

An outer wall 32D is formed generally toward the front from the end 32C to the outside in the vehicle width direction of the pillar outer panel 32. The rear portion of the outer wall 32D overlaps with an outer wall 28E of the pillar reinforcement 28, which forms an overlapped portion 32E. As shown in Fig. 1, the overlapping portions may be either completely in contact with each other or have a gap to some extent therebetween. An extended portion 32F extends from the forward end of the overlapped portion 32E toward the windshield glass 20. At the tip of the extended portion 32F, a window member support portion 32G having an L-shaped cross section is formed. The end 20A to the outside in the vehicle width direction of the windshield glass 20 is supported by the window member support portion 32G with adhesive 36. As a result, the end 20A to the outside in the vehicle width direction of the windshield glass 20 is provided on the pillar framework member 26 toward the vehicle front side by the extended portion 32F. Further, the gap between the window member support portion 32G and the end 20A to the outside in the vehicle width direction of the windshield glass 20 is covered by a glass molding 38. The windshield glass 20 has a three-layer structure in which an intermediate resin film 20B is sandwiched between glass 20C and 20D.

On the other hand, a pillar garnish 40 is disposed toward the inside in the vehicle cabin with respect to a pillar inner panel 30. The pillar garnish 40 has a front end 40A. An engagement latch 40B formed on the back side of the front end 40A engages with the window member support portion 32G of the pillar outer panel 32. Also, a rear end 40C of the pillar garnish 40 engages with a connecting flange through a weather strip 42. The connecting flange includes the flange 28B of the pillar reinforcement 28, the flange 30B of the pillar inner panel 30, and the flange 32B of the pillar outer panel 32. Further, ribs 40D, 40E, 40F are formed on the pillar garnish 40 toward the pillar inner panel 30. A rear portion 40G of the rib 40D and the rib 40F abut against the rear wall 30A of the pillar inner panel 30. A weather strip 44 shown in Fig. 1 is disposed on a frame 22A of the front side door 22.

Next, the operation of the first embodiment will be described.

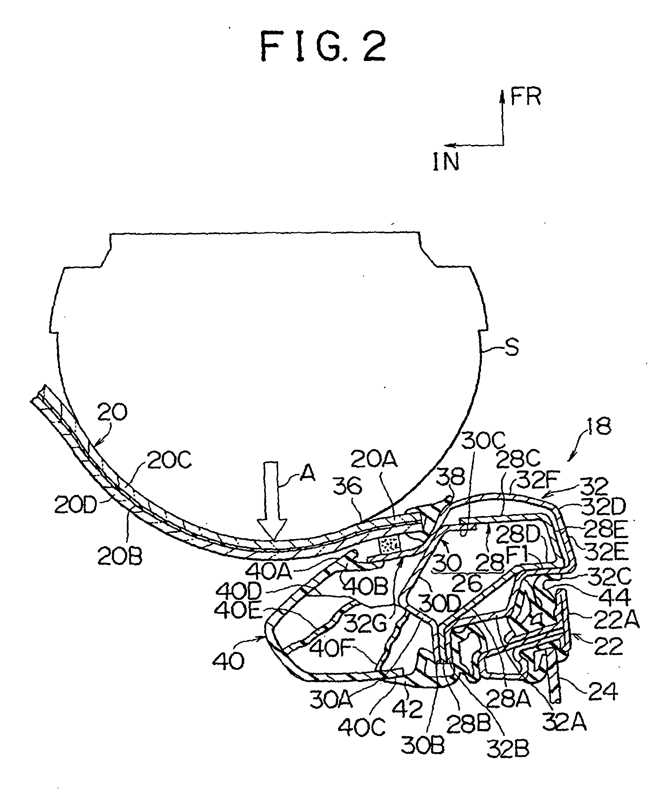

Fig. 2 shows a pillar structure in a deformed state when the windshield glass 20 is hit by a colliding body S near the front pillar 18. As can be seen here, in the first embodiment, when a load acts on the windshield glass 20 from generally the upper front side (direction indicated by arrow A in Fig. 2), the intermediate resin film 20B bends and the glass 20C and 20D break at the portion where that load has acted.

In the first embodiment, the end 20A to the outside in the vehicle width direction of the windshield 20 is fixed at a distance from the pillar framework 26 that bears the strength and rigidity of the front pillar 18 by the extended portion 32F of the pillar outer panel 32. Also, the window member 20 moves relative to the pillar framework member 26. Accordingly, the deformation stroke from the end 20A to the outside in the vehicle width direction of the windshield glass 20 to the pillar framework member 26 is increased while bearing the rigidity of the pillar framework, whereby the displacement of the colliding body S is increased, leading to improved impact absorbing performance against the colliding body S.

Also, an inclined face 30D that inclines toward the inside of the vehicle extending in the direction from the front of the vehicle toward the rear at a position where it abuts against the window member support portion 32G is provided. Accordingly, when the colliding body S collides against the windshield glass 20, the window member support portion 32G deforms up to a position where it abuts against the front wall 28C. Since the pillar framework member 26 has the inclined face 30D, the window member support portion 32G can move along the inclined face 30D further toward the rear of the vehicle with respect to the front wall 28C (Fig. 2). Accordingly, by providing the inclined face 30D on the pillar framework 26, interference between the window member 20 and the pillar framework member 26 is prevented. Moreover, the deformation stroke is further increased, increasing the displacement of the colliding body S, and thereby further improving impact absorbing performance against the colliding body S. Further, frictional force generated between the window member support portion 32G and the pillar inner panel 30 also absorbs impact energy.

Also, since the window member support portion 32G is made of a deformable member instead of a rigid member, the end 20A to the outside in the vehicle width direction of the windshield glass 20 can effectively bend. As a result, the impact absorbing performance against the colliding body can be improved.

The resistance force against impact at the extended portion 32F of the pillar outer panel 32 can be adjusted by a thickness T of the pillar outer panel 32.

Further, in the first embodiment, only the broken windshield glass 20 and the deformed pillar outer panel 32 are replaced during repair, and there is no need to replace the pillar framework member 26. Accordingly, the repair work is simple.

In the first embodiment, as shown in Fig. 1, since the extended portion 32F of the pillar outer panel 32 and the overlapped portion 32E also serve as the outer panel design surface, separate members for trim are unnecessary.

Since the pillar framework member 26 does not exist in the direction of movement of the window member 20 upon deformation of the extended portion 32F, interference between the pillar framework member 26 and the window member 20 can be prevented.

### Second embodiment

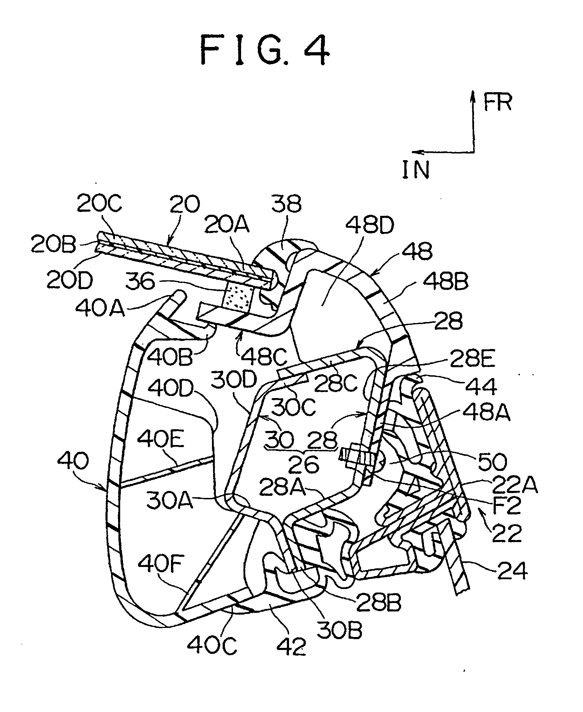

Next, a second embodiment of the vehicle window member support structure of the invention will be described with reference to Fig. 4.

Further, the same members as those described in the first embodiment will be denoted with the same reference numerals and the description thereof will be omitted.

As shown in Fig. 4, in the second embodiment, a pillar outer panel 48 serving as the pillar portion window installation means is formed of resin. An rear portion to the outside in the vehicle width direction of the pillar outer panel 48 and the outer wall 28E of the pillar reinforcement 28 are overlapped. This portion will be referred to as an overlapped portion 48A. The pillar outer panel 48 is fixed to the pillar framework 26 by fixing the overlapped portion 48A by means of fixing member 50 such as a screw and a nut. Similarly, the pillar outer panel 48 and the pillar reinforcement 28 may be bonded at the overlapped portion. The fixed portion F2 here serves similarly as the fixed portion F1 in the first embodiment. An extended portion 48B extends from the forward end of the overlapped portion 48A toward the windshield glass 20 side. At the tip of the extended portion 48B, a window member support portion 48C having a generally L-shaped cross section is formed. The end 20A to the outside in the vehicle width direction of the wind shield glass 20 is supported at the window member support portion 48C with adhesive 36.

At a portion of the pillar outer panel 48 opposing the front wall 28C of the pillar reinforcement 28, an abutting portion 48D that abuts against the front wall 28C of the pillar reinforcement 28 is formed. This abutting portion 48D crushes when a predetermined load or more is applied to the window member support portion 48C from generally the front upper side. Further, the abutting portion 48D that is provided on the pillar outer panel 48 at a portion other than the overlapped portion 48A and that abuts against the pillar framework member allows for easy adjustment of the resistance force of the extended portion 48B of the pillar outer panel 48 against impact.

This abutting portion 48D serves as an impact absorbing auxiliary member. Likewise, the impact absorbing auxiliary member may be provided integrally with the pillar portion window installation means.

As was the case with the first embodiment, the pillar framework member 26 bears the strength and rigidity of the front pillar 18. Also, the window member support portion 48C supports the end 20A to the outside in the vehicle width direction of the windshield glass 20. Moreover, the pillar outer panel 48 has the rear wall 48A and the pillar reinforcement 28 has the rear wall 28A.

Next, the operation of the second embodiment will be described.

In the second embodiment, similar to the first embodiment, the end 20A to the outside in the vehicle width direction of the windshield glass 20 is supported by the extended portion 48B of the pillar outer panel 48 at a position separated from the pillar framework member 26 that bears the strength and rigidity of the front pillar 18. Accordingly, similar to the first embodiment, the extended portion 48B deforms until the window member support portion 48C supporting the end 20A to the outside in the vehicle width direction of the windshield glass 20 abuts against the pillar framework member 26 when hit by a colliding body (not shown). As a result, the deformation stroke from the end 20A to the outside in the vehicle width direction of the windshield glass 20 to the pillar framework member 26 is increased while bearing the rigidity of the pillar framework, increasing the displacement of the colliding body, thereby leading to improved impact absorbing performance against a colliding body.

Further, an inclined face 30D that inclines toward the inside of the vehicle extending in the direction from the front of the vehicle toward the rear at a position where it abuts against the window member support portion 48C is provided. Accordingly, when the colliding body collides against the windshield glass 20, the window member support portion 48C deforms up to a position where it abuts against the front wall 28C. Since the pillar framework member 26 has the inclined face 30D, the window member support portion 48C may be moved along the inclined face 30D further to the vehicle rear side with respect to the front wall 28C. Accordingly, by providing the inclined face 30D on the pillar framework member 26, the deformation stroke is further increased, whereby the displacement of the colliding body is increased, leading to further improvement of impact absorbing performance against a colliding body. Also, frictional force generated between the window member support portion 48C and the pillar inner panel 30 absorbs impact energy.

Moreover, since the window member support portion 48C is made of a deformable member instead of a rigid member, the end 20A to the outside in the vehicle width direction of the windshield glass 20 can bend effectively. As a result, impact absorbing performance against a colliding body can be further improved.

The resistance force against impact at the extended portion 48B of the pillar outer panel 48 can be easily adjusted by the shape and thickness of the abutting portion 48D.

Also, in the second embodiment, only the broken windshield glass 20 and the deformed pillar outer panel 48 need to be replaced during repair, and replacement of the pillar framework member 26 is unnecessary. Accordingly, the repair work is simple.

In the second embodiment, as shown in Fig. 4, since the extended portion 48B of the pillar outer panel 48 also serves as the outer panel design surface of the front pillar 18, separate members for trim are unnecessary.

### Third embodiment

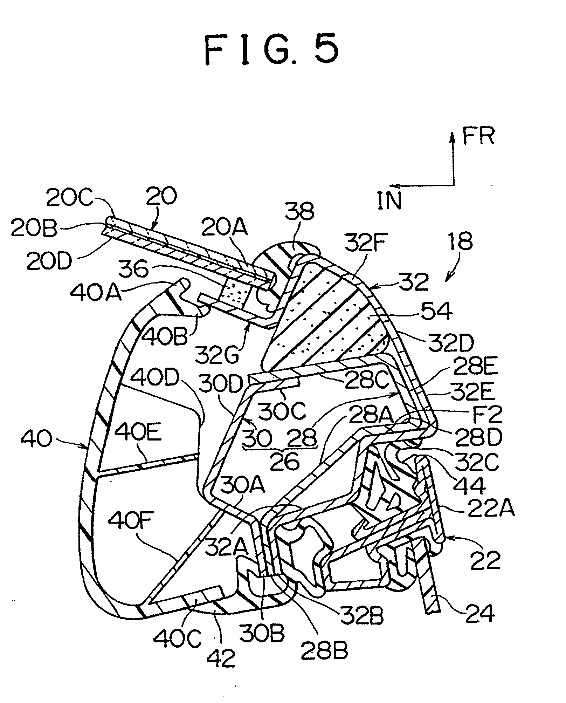

A third embodiment of the vehicle window member support structure of the invention will be described with reference to Fig. 5.

The same members as those described in the first embodiment will be denoted with the same reference numerals and the description thereof will be omitted.

As shown in Fig. 5, in the third embodiment, a resin foam 54 serving as deformation resistance force adjusting means is disposed between the pillar outer panel 32 and the front wall 28C of the pillar reinforcement 28. Accordingly, the deformation resistance force of the pillar outer panel toward the pillar framework member 26 side is made such that it can be increased according to the deformation amount. In the third embodiment, the deformation resistance force adjusting means was used as an example of the impact absorbing auxiliary member.

Next, the operation of the third embodiment will be described.

In the third embodiment, similar to the first embodiment, the end 20A to the outside in the vehicle width direction of the windshield 20 is fixed at a position at a distance from the pillar framework 26 that bears the strength and rigidity of the front pillar 18 by the extended portion 32F of the pillar outer panel 32. Therefore, as was the case with the first embodiment, the extended portion 32F deforms until the window member support portion 32G supporting the end 20A to the outside in the vehicle width direction of the windshield glass 20 abuts against the pillar framework member 26 when hit by a colliding body (not shown). As a result, the deformation stroke from the end 20A to the outside in the vehicle width direction of the windshield glass 20 to the pillar framework member 26 is increased while bearing the rigidity of the pillar framework, increasing the displacement of the colliding body S thereby, and leading to improvement of the impact absorbing performance against a colliding body.

Also, an inclined face 30D that inclines toward the inside of the vehicle extending in the direction from the front of the vehicle toward the rear at a position where it abuts against the window member support portion 32G is provided. Accordingly, when the colliding body collides against the windshield glass 20, the window member support portion 32G deforms up to a position where it abuts against the front wall 28C. Since the pillar framework 26 has the inclined face 30D, the window member support portion 32G can move along the inclined face 30D further to the vehicle rear side with respect to the front wall 28C with the adjustment of the shape and strength of the resin foam 54 which is an impact absorbing auxiliary member. Accordingly, by providing the inclined face 30D on the pillar framework member 26, it is also possible to achieve a further improved impact absorbing performance against a colliding body with the further increased deformation stroke and increased displacement of the colliding body. Also, frictional force generated between the window member support portion 32G and the pillar inner panel 30 absorbs impact energy.

Since the window member support portion 32G is made of a deformable member instead of a rigid member, the end 20A to the outside in the vehicle width direction of the windshield glass 20 can effectively bend. As a result, the impact absorbing performance against the colliding body can be improved.

In the third embodiment, the resin foam 54 is disposed between the pillar outer panel 32 and the front wall 28C of the pillar reinforcement 28. By disposing the resin foam 54, it is possible to increase the deformation resistance force of the pillar outer panel 32 toward the pillar framework member 26 according to the deformation amount. Consequently, impact absorbing performance against a colliding body can be effectively improved.

Further, in the third embodiment, the resin foam 54 that serves as the deformation frictional force adjusting means for increasing the deformation resistance force according to the deformation amount is used. However, the deformation resistance force adjusting means for increasing the deformation resistance according to the deformation amount is not limited to the resin foam 54.

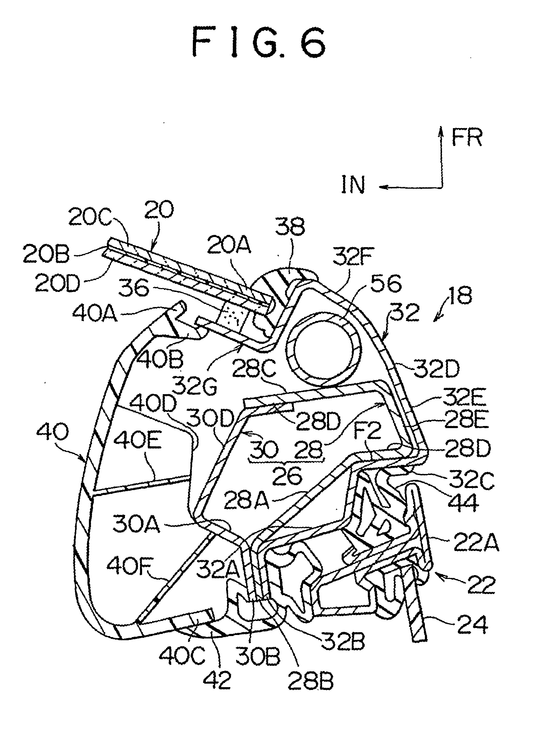

The deformation resistance force adjusting means employed may be such that the deformation resistance is maintained regardless of the deformation amount. For example, as shown in Fig. 6, a member such as a tube 56 made of a light alloy such as aluminum alloy is one example of a deformation resistance force adjusting means wherein the deformation resistance force is maintained regardless of the deformation amount.

### Fourth embodiment

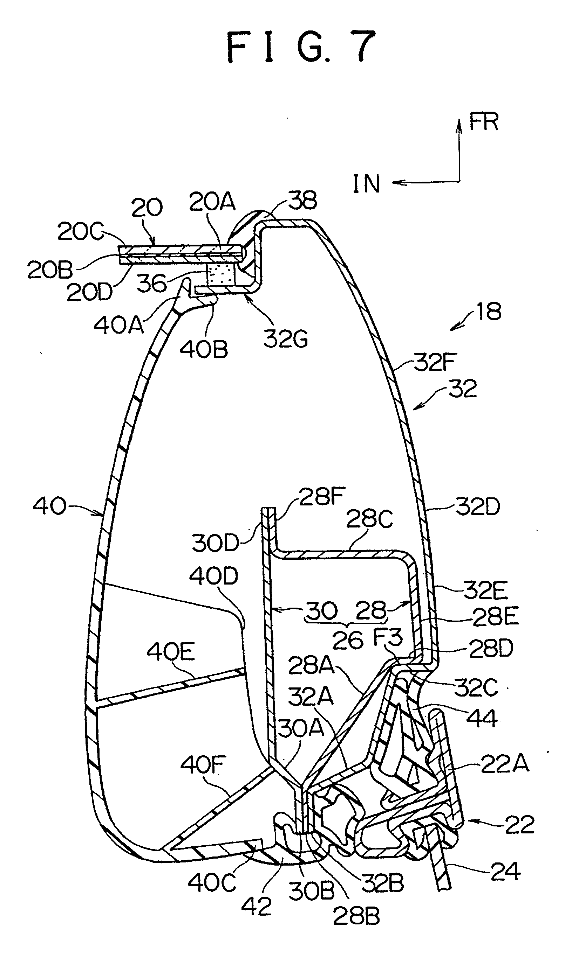

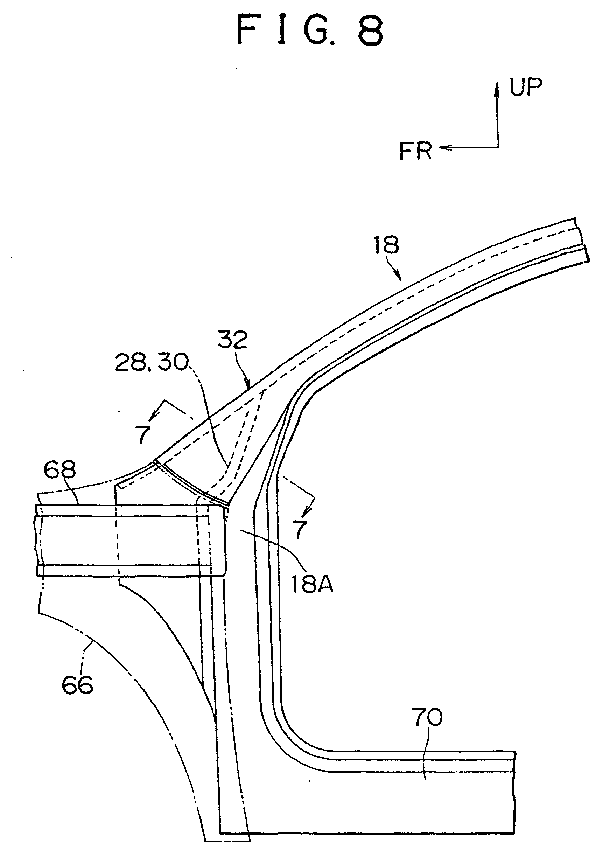

A fourth embodiment of the vehicle window member support structure of the invention will be described with reference to Figs. 7 and 8.

The same members as those described in the first embodiment will be denoted with the same reference numerals and the description thereof will be omitted.

As shown in Fig. 8, the fourth embodiment is a lower structure of the front pillar 18 in the first embodiment. The pillar outer panel 32 also serves as the installation portion for the windshield glass and extends along the windshield glass face toward the vehicle front. The pillar reinforcement 28 and the pillar inner panel 30 are connected to a perpendicular portion 18A of the front pillar 18 with a closed cross section.

As shown in Fig. 7, at the lower portion of the front pillar 18, a flange 28F is formed toward the front at an end to the inside in the vehicle width direction of the front wall 28C of the pillar reinforcement 28. The front end 30D of the pillar inner panel 30 is bonded and welded to this flange 28F. The bonded portion between the flange 28F and the front end 30D and the window member support portion 32G of the pillar outer panel 32 are widely separated in the longitudinal direction of the vehicle. Reference numerals 66, 68, and 70 denote a fender panel, a cowl side panel, and a rocker, respectively.

Similar to the first embodiment, the pillar framework member 26 bears the strength and rigidity of the front pillar 18. The pillar outer panel 32 has a rear wall 32A, and the pillar reinforcement 28 has a rear wall 28A. By overlapping and welding the end 32C to the outside in the vehicle width direction of the rear wall 32A and the end 28D to the outside in the vehicle width direction of the rear wall 28A, the pillar outer panel 32 is fixed to the pillar framework member 26. The bonded portion F3 here serves similarly as the fixed portion F1 in the first embodiment F1.

Next, the operation of the fourth embodiment will be described.

In the fourth embodiment, the end 20A to the outside in the vehicle width direction of the windshield 20 is fixed at a position at a distance from the pillar framework 26 that bears the strength and rigidity of the front pillar 18 by the extended portion 32F of the pillar outer panel 32. Consequently, similar to the first embodiment, the extended portion 32F deforms until the window support portion 32G that supports the end 20A to the outside in the vehicle width direction of the windshield glass 20 abuts against the pillar framework member 26. As a result, the deformation stroke from the end 20A to the outside in the vehicle width direction of the windshield glass 20 to the pillar framework member 26 is increased while bearing the rigidity of the pillar framework, increasing the displacement of the colliding object S, and leading to improved impact absorbing performance against a colliding body.

Also, the pillar outer panel 32 may be disposed adjacent to a fender panel 66.

In this case, the chances of the adjoining portion of the fender and the lower portion of the front pillar 18, where the frequency of collisions from a colliding body is generally high, becoming rigid in some areas can be reduced, which increases the deformation stroke and improves the impact absorbing performance against a colliding body.
Moreover, the window member support portion 32G was made of a deformable member instead of a rigid member. Accordingly, the end 20A to the outside in the vehicle width direction of the windshield glass 20 can bend effectively. As a result, the impact colliding performance against a colliding body can further be improved.

### Fifth embodiment

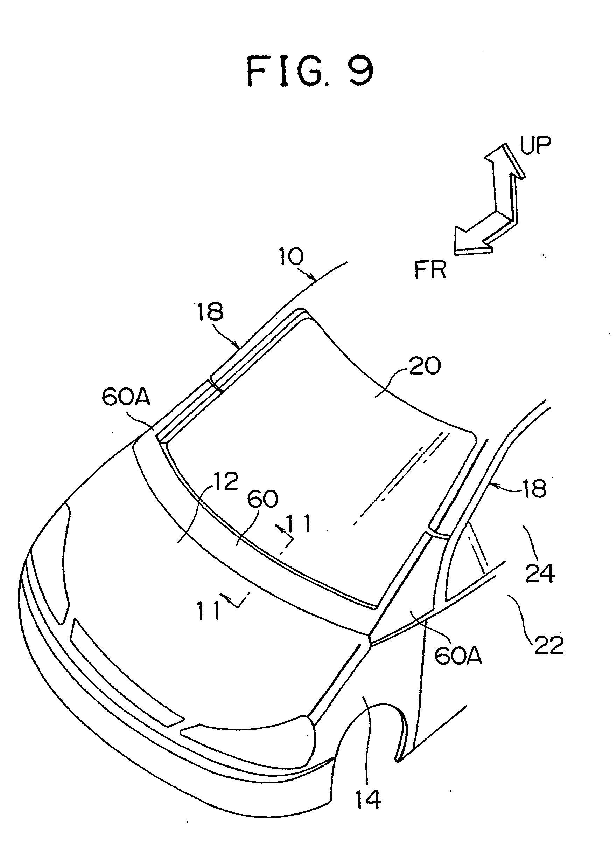

Now, a fifth embodiment of the window member support structure of the invention will be described with reference to Figs. 9 to 11.

The same members as those described in the second embodiment (Fig. 4) will be denoted with the same reference numerals and the description thereof will be omitted. Note that naturally it is possible to combine any of the structures in embodiments 1 through 4.

As shown in Fig. 9, in the fifth embodiment, both ends 60A of a cowl panel 60 in the vehicle width direction extend upward along the lower portion of the front pillar 18. Here, the cowl panel 60 is a cowl portion window member installation means made of resin. Also, the lower portion of the front pillar 18 is integrated with the cowl panel 60. That is, at the cowl end in vehicle width direction and the pillar lower end, the pillar portion window member installation means and the cowl portion window member installation means are integrated.

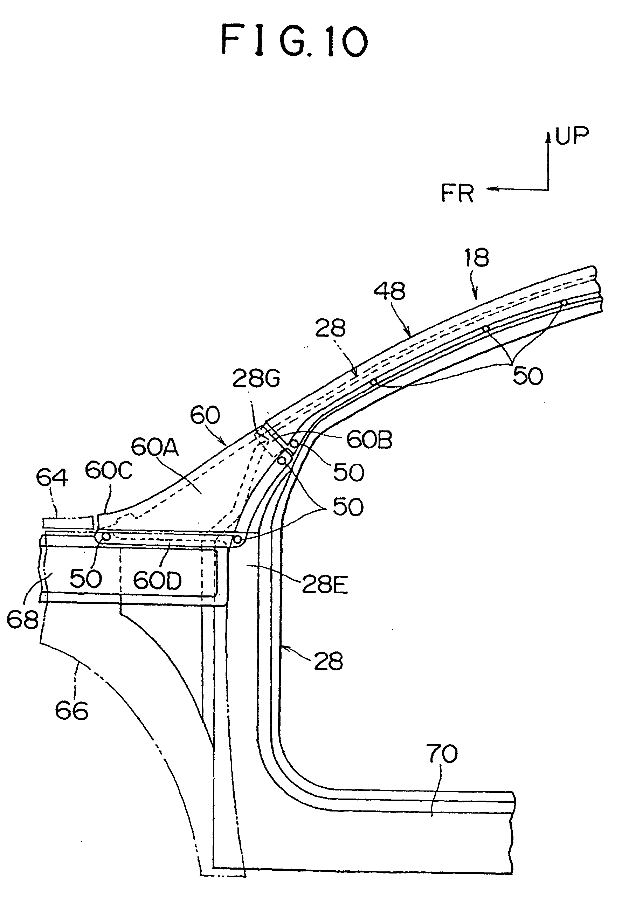

As shown in Fig. 10, an upper end 60B of both ends 60A of the cowl panel 60 in the vehicle width direction is connected to the front pillar 18 at a portion 28G at which the pillar reinforcement 28 hangs. Also, a front end 60C of the cowl panel 60 extends up to a joining face between the hood 64. A lower end 60D of both ends 60A of the cowl panel 60 in the vehicle width direction extends up to a joining face between a fender panel 66. Both ends 60A of the cowl panel 60 in the vehicle width direction are supported by the outer wall 28E of the pillar reinforcement and the cowl side panel 68 with a fixing member 50 such as a screw and a nut.

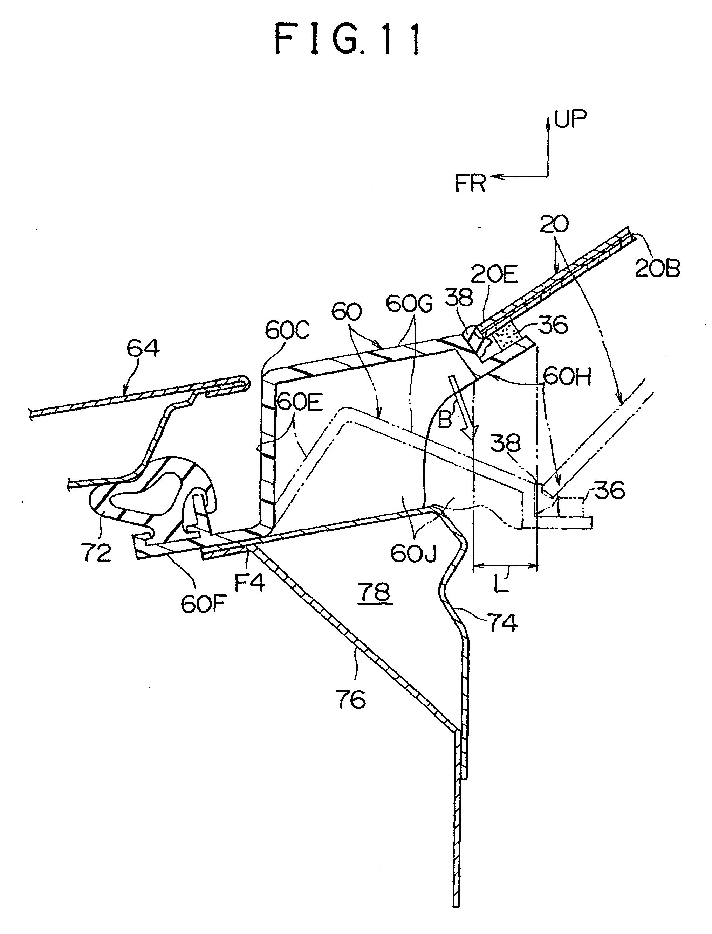

As shown in Fig. 11, a vertical wall 60E serving as an extended portion is formed generally downward at the front end 60C of the cowl panel 60. At the lower end of the vertical wall 60E, a flange 60F is formed generally toward the front. A weather strip 72 that blocks the gap between the hood 64 is disposed on the flange 60F. A cowl framework member 78 made of a cowl member 74 and a dash panel 76 is formed below the cowl panel 60. The left and right front pillars are connected by this cowl framework member 78.

The flange 60F of the cowl panel 60 is a portion overlapping with the cowl member 74. At this overlapped portion, the flange 60F and the cowl member 74 are bonded by means of welding or the like. The bonded portion F4 here serves similarly as the fixed portion F1 in the first embodiment. The cowl panel 60 is separated from the bonded portion toward the upper rear side of the vehicle. At the rear end of an upper wall 60G serving as the extended portion in the cowl panel 60, a window member support portion 60H having an L-shaped cross section is formed. Accordingly, the window member support portion 60H is offset to the vehicle rear with respect to the cowl framework member 78 by a distance L. The structure is made such that the window member support portion 60H does not interfere with the cowl framework member 78 when the window member support portion 60H deforms downward as shown by a chain double-dashed line. A lower end 20E of the windshield glass 20 is supported at the window member support portion 60H with adhesive 36. Further, the gap between the window member support portion 60H and the lower end 20E of the windshield glass 20 is covered by the glass molding 38.

On a lower face side of the cowl panel 60, an integrally formed rib 60J abuts against the cowl member 74. This rib 60J crushes when an object abuts against a portion in the vicinity of the lower portion of the windshield glass 20 or abuts against the cowl panel 60 and a predetermined load or greater acts thereon. The rib 60J serves as an impact absorbing auxiliary member.

Further, the window member support portion 60H supports the lower end 20E of the windshield glass 20. The cowl framework member 78 bears the strength and rigidity of the cowl.

Next, the operation of the fifth embodiment will be described.

In the fifth embodiment, as shown in Fig. 9, both ends 60A of the cowl panel 60 in the vehicle width direction extend upward along the lower portion of the front pillar 18. In this construction, the cowl panel 60 constitutes the lower end of the front pillar 18. As a result, the chances of the adjoining portion of the fender and the cowl (that is, the lower portion of the front pillar 18), where the frequency of collisions from colliding objects is generally high, becoming rigid in some areas can be reduced, since the three members, namely the front pillar outer panel 48, the fender panel 66, and the cowl panel 60 are prevented from overlapping each other at a single location. Accordingly, the deformation stroke is also increased at this portion, thereby improving the impact absorbing performance against a colliding body.

In the fifth embodiment, when the lower portion of the windshield glass 20 or the cowl panel 60 is hit by a colliding body and a load acts on the windshield glass 20 from generally the upper front side, the intermediate resin film 20B bends and the glass 20C and 20D breaks at the portion where the load has acted.

In the fifth embodiment, the lower end 20E of the windshield glass 20 is disposed at a position separated from the cowl framework member 78 by the vertical wall 60E and the upper wall 60G of the cowl panel 60. Accordingly, as shown by a chain double-dashed line in Fig. 11, the rib 60J crushes and the vertical wall 60E deforms in the direction of the cowl framework member 78 (direction indicated by arrow B in Fig. 11) together with the window member support portion 60H. As a result, the deformation stroke is increased, the displacement of the colliding body is increased, and the impact absorbing performance against a colliding body is improved.

Therefore, by combining the fifth and the first embodiments, it is possible to improve the impact absorbing performance against a colliding body in a continuous region from the end 20A to the outside in the vehicle width direction of the windshield glass 20 to the lower end 20E including the left and right corner portions of the lower end 20E of the windshield glass 20.

Moreover, in the fifth embodiment, since the upper wall 60G serving as the extended portion in the cowl panel 60 also serves as the cowl outer panel design surface, separate members for trim are unnecessary. Also, since both ends of the cowl in the vehicle width direction are made from a single member (cowl panel 60), the number of parts can be reduced.

### Other embodiments

In the fifth embodiment, both ends 60A of the cowl panel 60 are extended upward along the front pillar 18 such that both ends of the cowl portion window installation means in the vehicle width direction constitute the lower portion of the pillar portion window installation means. Conversely, however, the lower portion of the pillar outer panel may be extended from both ends in the vehicle width direction toward the inside in the vehicle width direction along the cowl such that the lower portion of the pillar portion window installation means constitutes both ends of the cowl portion window installation means in the vehicle width direction. Further, the window member may be installed using window member installation means wherein the left and right corner portions, pillar portion, and the cowl portion are respectively split at the lower end of the window member.

Means for fixing used at the fixed portion mentioned above may be a clip and a rivet.

The embodiments of the invention has been described in detail above.

## Claims

1. A vehicle window member support structure including a pillar framework member (26) constituting a framework of a pillar and a window member (20), wherein the structure comprises
pillar portion window member installation means (32, 48) having an overlapped portion (32E, 48A) overlapping with the pillar framework member and an extended portion (32F, 48B) extending from the overlapped portion toward a window side, which supports the window member at the extended portion,
**characterized in that**
the extended portion (32F, 48B) separates the window member (20) from the pillar framework member (26) in the front direction at a predetermined distance, and the vehicle window member support structure is applied to a front pillar (18).

2. A vehicle window member support structure according to claim 1, **characterized in that** an impact absorbing auxiliary member (48D, 54, 56) is provided between the pillar framework member (26) and the pillar portion window member installation means (32, 48).

3. A vehicle window member support structure according to either claim 1 or claim 2, **characterized in that** the pillar portion window member installation means (32, 48) is located adjacent to a fender.

4. A vehicle window member support structure according to claim 1, **characterized by** further comprising:
a cowl framework member (78) constituting a framework of a cowl; and
cowl portion window member installation means (60) having an overlapped portion overlapping with the cowl framework member and an extended portion (60G, 60E) extending from the overlapped portion toward the window side, which supports the window member at the extended portion,
the pillar portion window member installation means (32, 48) and the cowl portion window member installation means (60) being integrated at an end of the cowl in the vehicle width direction and at a lower end of the pillar.

5. A vehicle window member support structure according to claim 4, **characterized in that** both left and right ends of the cowl in the vehicle width direction are made from one member.

6. A vehicle window member support structure according to either claim 4 or claim 5, **characterized in that** the member in which the pillar portion window member installation means (32, 48) and the cowl portion window member installation means (60) are integrated is located adjacent to a fender.

7. A vehicle window member support structure according to any one of claims 1 to 6, **characterized in that** the extended portion (32F, 48B) of the pillar portion window member installation means also serves as an outer panel design surface.

8. A vehicle window member support structure according to any one of claims 4 to 7, **characterized in that** the extended portion (60G, 60E) of the cowl portion window member installation means also serves as an outer panel design surface.

9. A vehicle window member support structure according to any one of claims 1 to 8, **characterized in:**
**that** the pillar portion window member installation means (32, 48) is fixed to the pillar framework member.

10. A vehicle window member support structure according to any one of claims 1 to 9,
**characterized in that** a support portion (32G, 48C), for supporting the window member (20), in the pillar portion window member installation means (32, 48), and the framework member (26) do not interfere with each other when the extended portion (32F, 48B) deforms.

## Patentansprüche

1. Stützaufbau eines Fensterelementes eines Fahrzeuges mit einem Säulenrahmenelement (26), das ein Rahmenwerk aus einer Säule und einem Fensterelement (20) bildet, wobei der Aufbau folgendes aufweist:
eine Säulenabschnitt-Fensterelement-Einbaueinrichtung (32, 48) mit einem Überdeckungsabschnitt (32E, 48A), der sich mit dem Säulenrahmenelement überdeckt, und einem Erstreckungsabschnitt (32F, 48B), der sich von dem Überdeckungsabschnitt zu der Seite des Fensters hin erstreckt, wobei sie das Fensterelement an dem Erstreckungsabschnitt stützt,
**dadurch gekennzeichnet, dass**
der Erstreckungsabschnitt (32F, 48B) das Fensterelement (20) von dem Säulenrahmenelement (26) in der nach vorn weisenden Richtung bei einem vorbestimmten Abstand getrennt hält, und
der Stützaufbau des Fensterelementes des Fahrzeuges bei einer vorderen Säule (18) angewendet ist.

2. Stützaufbau eines Fensterelementes eines Fahrzeuges gemäß Anspruch 1,
**dadurch gekennzeichnet, dass**
ein Stoßabsorbierhilfselement (48D, 54, 56) zwischen dem Säulenrahmenelement (26) und der Säulenabschnitt-Fensterelement-Einbaueinrichtung (32, 48) vorgesehen ist.

3. Stützaufbau eines Fensterelementes eines Fahrzeuges gemäß entweder Anspruch 1 oder Anspruch 2,
**dadurch gekennzeichnet, dass**
die Säulenabschnitt-Fensterelement-Einbaueinrichtung (32, 48) sich benachbart zu einem Kotflügel befindet.

4. Stützaufbau eines Fensterelementes eines Fahrzeuges gemäß Anspruch 1,
**dadurch gekennzeichnet, dass**
er des Weiteren Folgendes aufweist:
ein Verkleidungsrahmenelement (78), das ein Rahmenwerk einer Verkleidung bildet; und
eine Verkleidungsabschnitt-Fensterelement-Einbaueinrichtung (60) mit einem Überdeckungsabschnitt, der sich mit dem Verkleidungsrahmenelement überdeckt, und einem Erstreckungsabschnitt (60G, 60E), der sich von dem Überdeckungsabschnitt zu der Seite des Fenster hin erstreckt, wobei diese das Fensterelement an dem Erstreckungsabschnitt stützt,
wobei die Säulenabschnitt-Fensterelement-Einbaueinrichtung (32, 48) und die Verkleidungsabschnitt-Fensterelement-Einbaueinrichtung (60) an einem Ende der Verkleidung in der Fahrzeugbreitenrichtung und an einem unteren Ende der Säule einstückig sind.

5. Stützaufbau eines Fensterelementes eines Fahrzeuges gemäß Anspruch 4,
**dadurch gekennzeichnet, dass**
sowohl das linke als auch das rechte Ende der Verkleidung in der Fahrzeugbreitenrichtung aus einem Element gestaltet sind.

6. Stützaufbau eines Fensterelementes eines Fahrzeuges gemäß entweder Anspruch 4 oder Anspruch 5,
**dadurch gekennzeichnet, dass**
das Element, bei dem die Säulenabschnitt-Fensterelement-Einbaueinrichtung (32, 48) und die Verkleidungsabschnitt-Fensterelement-Einbaueinrichtung (60) einstückig sind, sich benachbart zu einem Kotflügel befindet.

7. Stützaufbau eines Fensterelementes eines Fahrzeuges gemäß einem der Ansprüche 1 bis 6,
**dadurch gekennzeichnet, dass**
der Erstreckungsabschnitt (32F, 48B) von der Säulenabschnitt-Fensterelement-Einbaueinrichtung ebenfalls als eine Außenhautgestaltungstafel dient.

8. Stützaufbau eines Fensterelementes eines Fahrzeuges gemäß einem der Ansprüche 4 bis 7,
**dadurch gekennzeichnet, dass**
der Erstreckungsabschnitt (60G, 60E) von der Verkleidungsabschnitt-Fensterelement-Einbaueinrichtung ebenfalls als eine Außenhautgestaltungsfläche dient.

9. Stützaufbau eines Fensterelementes eines Fahrzeuges gemäß einem der Ansprüche 1 bis 8,
**dadurch gekennzeichnet, dass**
die Säulenabschnitt-Fensterelement-Einbaueinrichtung (32, 48) an dem Säulenrahmenelement befestigt ist.

10. Stützaufbau eines Fensterelementes eines Fahrzeuges gemäß einem der Ansprüche 1 bis 9,
**dadurch gekennzeichnet, dass**
ein Stützabschnitt (32G, 48C) zum Stützen des Fensterelements (20) bei der Säulenabschnitt-Fensterelement-Eibaueinrichtung (32, 48) und das Rahmenelement (26) sich nicht einander beeinträchtigen, wenn der Erstreckungsabschnitt (32F, 48B) sich verformt.

## Revendications

1. Structure de support d'organe de fenêtre de véhicule incluant un organe d'ossature de pilier (26) qui constitue une ossature d'un pilier et un organe de fenêtre (20), dans laquelle la structure comprend :
un moyen d'installation d'organe de fenêtre à la partie de pilier (32, 48) ayant une partie à recouvrement (32E, 48A) qui se chevauche avec l'organe d'ossature de pilier et une partie allongée (32F, 48B) s'étendant de la partie à recouvrement vers un bord de fenêtre, qui supporte l'organe de fenêtre à la partie allongée,
**caractérisée en ce que**
la partie allongée (32F, 48B) sépare l'organe de fenêtre (20) de l'organe d'ossature de pilier (26) dans la direction avant selon une distance prédéterminée et la structure de support d'organe de fenêtre de véhicule est appliquée à un pilier avant (18).

2. Structure de support d'organe de fenêtre de véhicule selon la revendication 1, **caractérisée en ce qu'**un organe auxiliaire qui absorbe l'impact (48D, 54, 56) est prévu entre l'organe d'ossature de pilier (26) et le moyen d'installation d'organe de fenêtre à la partie de pilier (32, 48).

3. Structure de support d'organe de fenêtre de véhicule selon soit la revendication 1, soit la revendication 2 **caractérisée en ce que** le moyen d'installation d'organe de fenêtre à la partie de pilier (32, 48) est situé adjacent à une aile.

4. Structure de support d'organe de fenêtre de véhicule selon la revendication 1, **caractérisée par** le fait de comprendre en outre :
un organe d'ossature de capot (78) qui constitue une ossature d'un capot ; et
un moyen d'installation d'organe de fenêtre à la partie de capot (60) ayant une partie à recouvrement qui se chevauche avec l'organe d'ossature de capot, et une partie allongée (60G, 60E) s'étendant de la partie à recouvrement vers le bord de fenêtre, qui supporte l'organe de fenêtre à la partie allongée,
le moyen d'installation d'organe de fenêtre à la partie de pilier (32, 48) et le moyen d'installation d'organe de fenêtre à la partie de capot (60) étant intégrés à une extrémité du capot dans le sens de la largeur de véhicule et à une extrémité inférieure du pilier.

5. Structure de support d'organe de fenêtre de véhicule selon la revendication 4, **caractérisée en ce que** les deux extrémités gauche et droite du capot dans le sens de la largeur de véhicule sont réalisées en un organe.

6. Structure de support d'organe de fenêtre de véhicule selon soit la revendication 4, soit la revendication 5, **caractérisée en ce que** l'organe dans lequel le moyen d'installation d'organe de fenêtre à la partie de pilier (32, 48) et le moyen d'installation d'organe de fenêtre à la partie de capot (60) sont intégrés, est situé adjacent à une aile.

7. Structure de support d'organe de fenêtre de véhicule selon l'une quelconque des revendications 1 à 6, **caractérisée en ce que** la partie allongée (32F, 48B) du moyen d'installation d'organe de fenêtre à la partie de pilier sert également comme surface à motifs du panneau externe.

8. Structure de support d'organe de fenêtre de véhicule selon l'une quelconque des revendications 4 à 7, **caractérisée en ce que** la partie allongée (60G, 60E) du moyen d'installation d'organe de fenêtre à la partie de capot sert également comme surface à motifs du panneau externe.

9. Structure de support d'organe de fenêtre de véhicule selon l'une quelconque des revendications 1 à 8, **caractérisée en :**
**ce que** le moyen d'installation d'organe de fenêtre à la partie de pilier (32, 48) est fixé à l'organe d'ossature de pilier.

10. Structure de support d'organe de fenêtre de véhicule selon l'une quelconque des revendications 1 à 9,
**caractérisée en ce qu'**une partie de support (32G, 48C), pour supporter l'organe de fenêtre (20), dans le moyen d'installation d'organe de fenêtre à la partie de pilier (32, 48) et l'organe d'ossature (26) n'interfèrent pas l'un avec l'autre lorsque la partie allongée (32F, 48B) se déforme.
